# EUROPEAN PATENT SPECIFICATION

(11) **EP 0 830 692 B1**
(45) Date of publication and mention of the grant of the patent: **24.03.1999**
(21) Application number: 96916226.2
(22) Date of filing: 05.06.1996
(51) Int. Cl.: H01B 12/02

(54) **ELECTRIC CONDUCTORS AND CABLES**
ELEKTRISCHE LEITER UND KABEL
CONDUCTEUR ET CABLE ELECTRIQUE

(30) Priority: 07.06.1995 GB 9511464
(43) Date of publication of application: 25.03.1998
(73) Proprietor: BICC Public Limited Company, London W1X 5FH (GB); Bicc Ceat Cavi S.r.l., 10036 Settimo Torinese (Torino) (IT)
(72) Inventor: BEALES, Timothy, Paul, Keraville, Wollongong NSW 2500 (AU); FRIEND, Christopher, Michael, Chester CH2 3BX, Cheshire, (GB); FERRERO, Edoardo, Domenico, Torino, Piemonte, (IT)
(74) Representative: Poole, Michael John
(86) International application number: GB9601321
(87) International publication number: WO9641352

(56) References cited:
- EP-A- 0 451 864
- PATENT ABSTRACTS OF JAPAN vol. 17, no. 371 (E-1396) 13 July 1993 & JP,A,50 062 536 (HITACHI CABLE) 12 March 1993

## Description

This invention relates to electric conductors for use in cables and more particularly in power cables with conductors comprising material that is superconducting at the operating temperature of the cable, hereinafter for brevity called "superconducting cables". It relates primarily to superconducting conductors for cables comprising "high temperature" ceramic superconducting materials with an operating temperature over 15K. It also includes the cables in which such conductors are used.

To achieve adequate supercurrent capacity in such conductors, it is necessary to form them from a plurality of elementary superconductors, normally in the form of flat tapes and typically comprising a flattened tube of silver containing particles of the superconducting ceramic which are anisotropic and should as far as practicable be aligned with their major faces parallel to the flat surfaces of the tape. Such tapes will normally be associated with carriers of copper, primarily to provide structural support and an alternative current path of reasonably low resistance in the event of a small portion of the superconductor losing its superconducting character owing to localised high temperature or magnetic field (or to other causes).

Hitherto it has been the normal practice to bond the elementary superconductor tapes solidly to the copper carriers by brazing or soldering, which not only incurs manufacturing costs but also produces a composite conductor which is relatively stiff and risks damage on flexing. EP-A-0451864 proposes, *inter alia,* the use of hollow carriers, either metallic or non-metallic, in which the tapes are to be housed and to which they may be secured by an adhesive or by taping; even if a non-adhesive securing tape is used, however, it is required that the support and the tapes are so "composed" with each other as to integrally move against thermal expansion and contraction.

We have now discovered that it is not necessary to maintain contact between the tapes and the copper carrier at every point along their length and that a robust and effective conductor can be made without any solid bonding between the tapes and the carrier.

In accordance with the invention, a conductor for a superconducting cable comprises a hollow copper carrier having at least one elementary superconductor tape housed within it, *characterised in that* the tape is loosely housed so as to admit relative movement with respect to the copper carrier at least in the direction of the width of the tape.

To maximise contact between the tape and the copper carrier, and between one tape and another when there is more than one, we prefer that substantial relative movement is permitted only in that direction when the conductor is terminated, but some freedom of movement in the directions of the thickness and/or the length of the tape(s) is not excluded and freedom of movement in the direction of the length of the tape is desirable during assembly of the conductor into a cable.

Localised bonding of the tape(s) to the copper carrier is not excluded provided that the required movement is available for a large proportion of its length; but it is not recommended, except where external connections are being made.

The hollow copper carrier may have a closed cross-section (a tube) or an open one (a channel) but should preferably extend around at least three sides of the tape(s). If it is initially open, it may be wholly or partly closed either by changing its shape or by adding a separate closure member after assembly with the tape(s). The copper carrier preferably has at least one flat internal surface presented to one of the flat faces of the (or a) tape to provide opportunity for face-to-face contact.

For maximum effectiveness, the carrier and any separate closure member is preferably made entirely of copper, but the inclusion of other materials (such as stainless steel for mechanical support or tin to facilitate soldering if and where required) is permitted, and in some cases a closure member might be wholly non-conducting.

Cooling requirements limit the cross-section that is acceptable, and for use in cable of practical capacity it will normally be necessary to assemble together several of the conductors described. Preferably they are externally of a shape (or shapes) that can be assembled, longitudinally or preferably with a helical lay, to form a tubular overall conductor, with or without using a separate cylindrical internal support. For use with a support, the copper carriers may be trapezoidal or segments of a cylinder (or if the number to be assembled is sufficiently large, may be square or rectangular). For use without a support, these simple shapes are preferably modified to provide interlocking formations on the contiguous surfaces of adjacent copper segments: for instance, one face of each carrier may be formed with a projection and its opposite face with a corresponding groove, or (if the number of carriers to be assembled is even) half the copper carriers may have projections and the other half grooves on both the faces that will be contiguous with the other type of carrier when assembled.

Any of the several known ceramic superconductor materials may be used; at present we prefer to use "BSCCO" superconductors of formula Bi₂₋ₓPbₓSr₂Ca₂Cu₃O₁₀-δ where δ is less than 1 but this is rather on grounds of better availability than of particular technical merit. The invention might be used with elementary superconductor tapes of metallic material (e.g. of Nb₃Sn).

When using ceramic superconducting materials, we prefer to form them into tapes by a "powder-in-tube" process in which a silver tube is packed with the superconducting material (or a precursor that can be rendered superconducting by subsequent heat-treatment) and the tube then converted to a tape of much smaller cross-section by a process comprising at least one of drawing, swaging, longitudinal rolling, transverse rolling, rotary forging, or progressive pressing. The last three processes, and more particularly rolling and rotary forging, are preferred as they offer a higher degree of particle alignment than drawing or swaging.

With current superconductor tape technology, the number of elementary superconductor tapes inserted in a carrier is likely to be in the approximate range 5-20. If the copper carrier is open, and the properties of the available tapes vary (as is the case with current pilot production superconducting tapes) it is preferable to select tapes with the highest critical current densities (J_{c} values) for location closest to the base of the copper carrier, since tapes in this position may carry a disproportionate share of surge currents on the occurrence of faults or switching.

Preferably the tapes are pre-assembled into one or more than one bundle to simplify insertion into the copper carrier; such bundles may be secured by a closed or open wrapping of thin flexible copper (or silver) tape or by an open wrapping of a suitable plastics material.

The cable in accordance with the invention includes at least two conductors as described and means for insulating them electrically from each other and thermally from the environment (and will be associated in an installation with means for cooling at least the conductors to a cryogenic working temperature). Preferably at least two overall tubular conductors of the kind described are concentrically arranged around a central coolant duct.

Preferred electrical insulating materials are paper (broadly following the practice of oil-impregnated paper power cables, but with an insulating gas (or liquefied gas) and not oil as impregnant). The same insulating gas (or liquefied gas) may also serve as coolant.

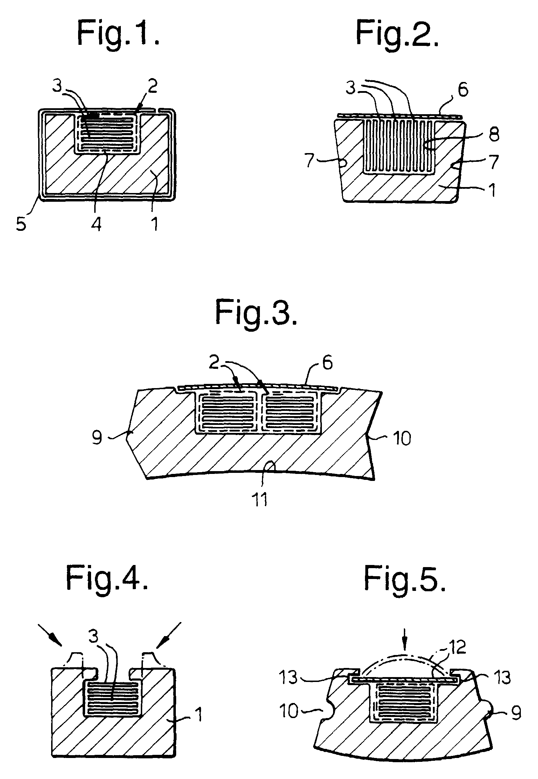

The invention will be further described, by way of example, with reference to the accompanying drawings in which:
Each of Figures 1-5 is a diagrammatic cross-section of a conductor in accordance with the invention; and

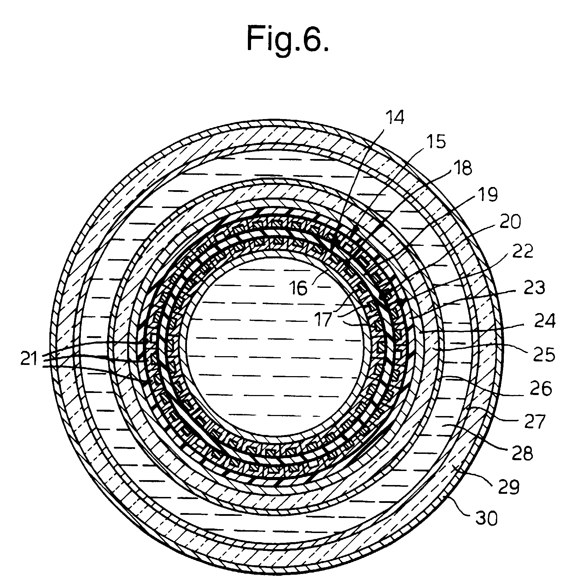

Figure 6 is a diagrammatic cross-section of a cable in accordance with the invention.

Figure 1 shows a simple form of conductor in accordance with the invention, comprising a copper channel-section carrier 1 of rectangular overall shape within which is loosely housed a bundle 2 of elementary superconducting tapes 3 enclosed by an open helical wrapping 4 of polyimide (Kapton®) yarn or of polyaramid (Kevlar®) tape. The bundle is made captive within the copper carrier by a similar overall wrapping 5, but this allows the bundle freedom of movement of the order of 0.5mm in the direction of the width of the tape (horizontally parallel to the plane of the paper as drawn) The resilience and relatively low tension of the wrapping 4 also allows comparable relative movements between the individual elementary superconductors in the same direction.

There is no substantial freedom of movement in other directions. Although, for purposes of simple illustration, only four tapes are shown, larger numbers are contemplated.

In first and second modifications (not illustrated separately) the wrapping 4 and/or the wrapping 5 respectively is replaced with a thin flexible copper tape, which may if desired be wide enough to enclose completely the bundle or the bundle and the copper carrier, as the case may be; if so, there is an option to apply the copper tape longitudinally instead of helically.

Figure 2 illustrates a number of modifications that may be adopted independently; first, the tapes 3 are positioned vertically rather than horizontally in the copper carrier 1 (and are shown without the optional bundling tape) ; second, the open side of the copper channel-section carrier 1 is closed by a copper strip 6 secured by seam-welding or spot-welding to form a copper carrier of closed hollow cross-section (seamless closed hollow cross-sections can also be used, but insertion of the tapes is difficult); and third, the side faces of the copper carrier are inclined to give it a trapezoid section and facilitate assembly into a closely fitting tubular overall conductor: note that the inner side faces 8 remain vertical to permit face-to-face contact with the tapes 3.

Figure 3 also shows a number of independently usable modifications: more than one bundle 2 of tapes has been used; the sides of the copper carrier have been formed with potentially interlocking formations 9 (a rib) and 10 (a groove) to allow the formation of a self-supporting tubular overall conductor; and the bottom surface 11 of the copper carrier has been concavely curved to conform to the intended smooth bore of such an overall conductor.

Figure 4 shows how a copper carrier 1, initially of the shape shown in dotted lines, may be deformed after insertion of the tapes 3 (for instance by rolling) to make them captive without using any other component.

Figure 5 shows an alternative way of securing the bundle 2 by using a separate copper closure member 12 which is initially curved but is flattened to enter grooves 13 in the main copper carrier 1. It also shows an alternative shape for the rib 9 and groove 10 and illustrates the fact that the curvature of surface 11 may be convex, so as to form part of the outer surface of a smooth tubular conductor.

Figure 6 is a diagrammatic cross-section of a complete cable in accordance with the invention. It comprises concentric overall tubular inner and outer conductors 14 and 15 respectively. The inner conductor 14 is helically laid on and supported by an open helix 16 of stainless steel and comprises thirty-two conductors 17 of the form shown in Figure 1, each conductor having a copper cross-section of 15mm² and enclosing ten elementary silver-clad BSCCO superconductors each 3mm wide and 0.2mm thick and having on average individual critical current (I_{c}) values of about 10A at 77K and about 40A at 40K under self-field conditions in each case, corresponding to critical current density (J_{c}) values of about 8kA/cm² and 32kA/cm² respectively.

The inner conductor 14 is enclosed in a conductor screen 18 comprising three carbon-loaded papers and one duplex paper (comprising plies of carbon-loaded and insulating grades of paper laid and bonded together in the paper-making process, the carbon-loaded ply facing the carbon-loaded paper tapes), insulation 19 comprising thirty-four insulating paper tapes with an aggregate thickness of 5mm and a dielectric screen 20 comprising another duplex paper tape and one carbon-loaded paper tape, following the usual practice for impregnated-paper insulated cables.

The outer overall conductor 15 is helically applied directly over the dielectric screen and comprises thirty-two of the conductors shown in Figure 1 and described above (here referenced 21) and six empty copper carriers (evenly spaced around the circumference) to complete the layer while keeping the numbers of conductors and their dimensions the same in both tubular conductors) and is surrounded by an outer screen 22 of three carbon-loaded and one duplex paper and outer insulation 23 consisting of twenty insulating paper tapes again with an aggregate thickness of 5mm (individual paper tapes are thicker than in the first insulation layer).

The remaining outer part of the cable is conventional and comprises a corrugated copper sheath 24 surrounded by "superinsulation" 25 (thermal insulation based on metallised foils under vacuum), further concentric copper tubes 26 and 27 defining an outer coolant duct 28 (maintained by spacers, not shown), another layer of superinsulation 29 and an outer metal jacket 30.

The cable is to be cooled (for example) by helium gas entering the central coolant duct at a temperature of about 25K and warming to about 58K by the time it reaches the other end of the cable, from where it returns via the outer coolant duct 28 where it will warm further, at most to about 230K, before returning to the refrigeration plant for reuse.

A short length of model cable was made in accordance with Figure 6, except that no empty carriers were used in the outer conductor (so that the capacity of the outer conductor was greater than that of the inner one), the outer part (from sheath 24 outwards) was omitted and the whole immersed in a large cryogenic vessel. Terminations were made (prior to immersion) by locally soldering the tapes together and to the copper carriers with an alloy of 95%In, 5%Ag. At an operating temperature of 31K, this model cable was found capable of sustaining a supercurrent in excess of 10kA dc in its own self-field.

## Claims

1. A conductor for a superconducting cable comprising a hollow copper carrier (1) having at least one elementary superconductor tape (3) housed within it *characterised in that* the tape is loosely housed so as to admit relative movement with respect to the copper carrier at least in the direction of the width of the tape.

2. A conductor as claimed in claim 1 in which, when terminated, substantial relative movement is permitted only in the said direction.

3. A conductor as claimed in claim 1 or claim 2 in which the hollow copper carrier (1) extends around at least three sides of the tape or all of the tapes.

4. A conductor as claimed in claim 3 in which the copper carrier (1), having initially been open, is wholly or partly closed either by changing its shape or by adding a separate closure member (6, 12) after assembly with the tapes.

5. A conductor as claimed in any one of claims 1-4 in which the copper carrier (1) has at least one flat internal surface (8) presented to one of the flat faces of said tape, or one of said tapes, (3) to provide opportunity for face-to-face contact.

6. A conductor as claimed in any one of claims 1-5 which is externally of a shape that can be assembled with identical or correspondingly shaped conductors, longitudinally or with a helical lay, to form a tubular overall conductor.

7. A conductor as claimed in claim 6 having interlocking formations (9, 10) on the surfaces of the copper carriers that will be contiguous when so assembled.

8. A conductor as claimed in any one of claims 1-7 in which the said tape (3) comprises a ceramic superconductor material.

9. A conductor as claimed in any one of claims 1-7 in which the said tape (3) comprises a superconductor material of formula Bi₂₋ₓPbₓSr₂Ca₂Cu₃O₁₀-δ where δ is less than 1.

10. A conductor as claimed claim 8 or claim 9 in which the tapes (3) have been formed by a "powder-in-tube" process in which a silver tube is packed with the superconducting material or with a precursor that can be rendered superconducting by subsequent heat-treatment and the tube then converted to a tape of much smaller cross-section by a process comprising at least one of drawing, swaging, longitudinal rolling, transverse rolling, rotary forging, or progressive pressing.

11. A superconducting cable comprising at least two conductors (17, 21) as claimed in any one of claims 1-10 and means for insulating them electrically from each other and thermally from the environment.

12. A cable as claimed in claim 11 including a plurality of said conductors (17, 21) assembled to form at least two overall tubular conductors (14,15) which are concentrically arranged around a central coolant duct.

13. A superconducting cable installation comprising at least one cable as claimed in claim 11 or claim 12 and means for cooling at least the conductors (17, 21) to a cryogenic working temperature.

## Patentansprüche

1. Leiter für ein supraleitendes Kabel mit einem hohlen Kupferträger (1) mit mindestens einem darin untergebrachten Elementarsupraleiterband (3), dadurch gekennzeichnet, daß das Band so lose untergebracht ist, daß eine Relativbewegung gegenüber dem Kupferträger mindestens in Breitenrichtung des Bands erfolgen kann.

2. Leiter nach Anspruch 1, wobei nach Endenabschluß eine wesentliche Relativbewegung nur in dieser Richtung erfolgen kann.

3. Leiter nach Anspruch 1 oder Anspruch 2, wobei sich der hohle Kupferträger (1) um mindestens drei Seiten des Bands oder sämtlicher Bänder erstreckt.

4. Leiter nach Anspruch 3, wobei der anfangs offene Kupferträger (1) durch Ändern seiner Form oder durch Zugeben eines gesonderten Verschlußteils (6, 12) nach Zusammenbau mit den Bändern ganz oder teilweise geschlossen ist.

5. Leiter nach einem der Ansprüche 1 bis 4, wobei der Kupferträger (1) mindestens eine flache Innenfläche (8) hat, die zu einer der flachen Flächen des Bands oder eines der Bänder (3) weist, um eine Gelegenheit für einen Flächenkontakt vorzusehen.

6. Leiter nach einem der Ansprüche 1 bis 5, der außen eine Form hat, die mit identischen oder entsprechend geformten Leitern längs oder mit einem spiralförmigen Schlag zu einem rohrförmigen Gesamt leiter zusammengebaut werden kann.

7. Leiter nach Anspruch 6 mit ineinandergreifenden Gebilden (9, 10) auf den Oberflächen der Kupferträger, die bei einem solchen Zusammenbau aneinandergrenzen.

8. Leiter nach einem der Ansprüche 1 bis 7, wobei das Band (3) ein keramisches Supraleitermaterial aufweist.

9. Leiter nach einem der Ansprüche 1 bis 7, wobei das Band (3) ein Supraleitermaterial der Formel Bi₂₋ₓPbₓSr₂Ca₂ Cu₃O₁₀-δ aufweist, worin δ kleiner als 1 ist.

10. Leiter nach Anspruch 8 oder Anspruch 9, wobei die Bänder (3) durch ein "Pulver-im-Rohr"-Verfahren ausgebildet sind, bei dem ein Silberrohr mit dem supraleitenden Material oder einem Vorläufer, der durch anschließende Wärmebehandlung supraleitend gemacht werden kann, gepackt und das Rohr danach zu einem Band mit wesentlich kleinerem Querschnitt durch ein Verfahren umgewandelt wird, das Ziehen, Gesenkformen, Längswalzen, Querwalzen, Schrägwalzen und/oder Stufenpressen aufweist.

11. Supraleitendes Kabel mit mindestens zwei Leitern (17, 21) nach einem der Ansprüche 1 bis 10 und einer Einrichtung zu ihrem elektrischen Isolieren voneinander und Wärmeisolieren von der Umgebung.

12. Kabel nach Anspruch 11 mit mehreren der Leiter (17, 21), die zu mindestens zwei rohrförmigen Gesamtleitern (14, 15), die konzentrisch um einen mittleren Kühlmittelkanal angeordnet sind, zusammengebaut sind.

13. Supraleitende Kabelinstallation mit mindestens einem Kabel nach Anspruch 11 oder Anspruch 12 und einer Einrichtung zum Kühlen mindestens der Leiter (17, 21) auf eine Arbeitstiefsttemperatur.

## Revendications

1. Conducteur pour câble supraconducteur comprenant un support creux (1), en cuivre, dans lequel est placé au moins un ruban supraconducteur élémentaire (3), caractérisé en ce que le ruban est disposé avec un certain jeu de manière à permettre un déplacement relatif par rapport au support en cuivre, au moins dans la direction de la largeur du ruban.

2. Conducteur selon la revendication 1, dans lequel un déplacement relatif important n'est permis, une fois la fabrication terminée, que dans ladite direction.

3. Conducteur selon la revendication 1 ou la revendication 2, dans lequel le support creux en cuivre (1) s'étend autour de trois côtés au moins du ruban ou de tous les rubans.

4. Conducteur selon la revendication 3, dans lequel le support en cuivre (1), qui était initialement ouvert, a été fermé totalement ou partiellement par modification de sa forme ou par addition d'un élément séparé de fermeture (6, 12), après l'assemblage avec les rubans.

5. Conducteur selon l'une quelconque des revendication 1 à 4, dans lequel le support en cuivre (1) comprend au moins une surface intérieure plate (8) opposée à l'une des faces plates dudit ruban (3), ou de l'un desdits rubans (3), qui offre une opportunité de contact face contre face.

6. Conducteur selon l'une quelconque des revendication 1 à 5, qui a extérieurement une forme lui permettant d'être assemblé avec des conducteurs identiques ou de forme correspondante, dans le sens longitudinal ou en hélice, pour former un conducteur tubulaire.

7. Conducteur selon la revendication 6, comportant des éléments d'accrochage mutuel (9, 10) sur les surfaces des supports en cuivre qui seront contigües lors de l'assemblage.

8. Conducteur selon l'une quelconque des revendication 1 à 7, dans lequel ledit ruban (3) comprend un matériau supraconducteur céramique.

9. Conducteur selon l'une quelconque des revendication 1 à 7, dans lequel ledit ruban (3) comprend un matériau supraconducteur céramique de formule Bi₂₋ₓPbₓSr₂Ca₂Cu₃O_{10-δ} dans laquelle δ est inférieur à 1.

10. Conducteur selon la revendication 8 ou la revendication 9, dans lequel les rubans (3) ont été formés par une technique dite "poudre dans tube", dans laquelle on remplit un tube d'argent d'un matériau supraconducteur ou d'un précurseur qui peut être rendu supraconducteur par un traitement thermique ultérieur, et on transforme ensuite le tube en un ruban de section beaucoup plus petite par une technique choisie parmi l'étirage, le matriçage, le laminage longitudinal ou transversal, le forgeage rotatif ou le travail à la presse progressive.

11. Câble supraconducteur comprenant au moins deux conducteurs (17, 21) selon l'une quelconque des revendications 1 à 10 et un moyen servant à les isoler les uns des autres du point de vue électrique et à les isoler de l'extérieur du point de vue thermique.

12. Câble selon la revendication 11, contenant une pluralité de conducteurs pré-cités(17, 21) assemblés pour former au moins deux conducteurs tubulaires (14, 15) qui sont disposés de manière concentrique autour d'un conduit central pour fluide de refroidissement.

13. Installation de câbles supraconducteurs comprenant au moins un câble selon la revendication 11 ou la revendication 12 et un moyen servant à refroidir les conducteurs (17, 21) à une température de travail cryogénique.
